# EUROPEAN PATENT APPLICATION

(11) **EP 4 586 738 A1**
(43) Date of publication of application: **16.07.2025**
(21) Application number: 23862375.5
(22) Date of filing: 05.09.2023
(51) Int. Cl.: H04W 76/27

(54) **METHOD EXECUTED BY USER EQUIPMENT, AND USER EQUIPMENT**

(30) Priority: 06.09.2022 CN 202211086955
(71) Applicant: Sharp Kabushiki Kaisha, Sakai City, Osaka 590-8522 (JP)
(72) Inventor: LIU, Renmao, Shanghai 201206 (CN); ZHANG, Chongming, Shanghai 201206 (CN)
(74) Representative: Müller Hoffmann & Partner
(86) International application number: PCT/CN2023/116975
(87) International publication number: WO 2024/051681

(57) **Abstract**

The present invention provides a method performed by a user equipment, and a user equipment. The method is a processing method executed during communication performed between the UE and a base station on the basis of a multi-path communication mode, and includes the following steps: receiving, by the UE, an RRC message from the base station, the message including information used to instruct the UE to establish an indirect connection for communicating with the base station via a relay UE, and the message also including identity information of the relay UE; when receiving the RRC message, the UE setting the relay UE corresponding to the identity information of the relay UE included therein as a target relay UE, and establishing an SL connection or a PC5 connection with the relay UE; and, in a process of initiating establishment of the SL connection or the PC5 connection with the relay UE or after the SL connection or the PC5 connection is successfully established, the UE transmitting to the relay UE a PC5 RRC message of the information used to instruct that the indirect connection be established.

## Description

### TECHNICAL FIELD

The present invention relates to the technical field of wireless communications. More specifically, the present invention relates to a method performed by a user equipment, and a corresponding user equipment.

### BACKGROUND ART

In a cell covered by a base station, a user equipment (UE) can directly communicate with the base station, and such a communicative connection is referred to as a direct connection. The UE may also have a communicative connection with a base station via a relay UE, and such a connection may be referred to as an indirect connection. In the scenario in which the UE communicates with a base station via a relay UE, the UE is referred to as a remote UE.

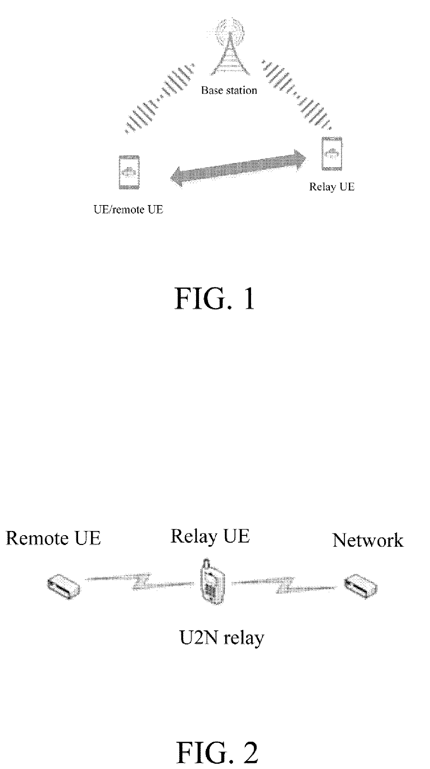

In order to improve uplink and downlink transmission rates and throughput of the UE, the UE may simultaneously operate in a direct connection mode and an indirect connection mode. As shown in FIG. 1, in such an operation mode, the UE and the base station communicate with each other via different paths; therefore, the operation mode may also be referred to as a multi-path communication mode.

In FIG. 1, a wireless communication mode is typically adopted between a remote UE and a base station and between a relay UE and the base station, for example, communication techniques and means such as 5G NR or LTE. Moreover, the remote UE and the relay UE may communicate with each other on the basis of a sidelink communication mode, or a Wi-Fi communication mode based on hotspot coverage, or a wired connection mode.

The relay UE needs to establish an RRC connection with the base station, that is, enter an RRC connected state (RRC Connected) to serve the remote UE. Accordingly, an issue to be addressed is when should a relay UE in an idle state or an inactive state (IDLE/INACTIVE) establish an RRC connection to serve a remote UE.

### SUMMARY OF THE INVENTION

In order to address the aforementioned issue, the present invention provides a method performed by a user equipment, and a user equipment, which can cause a relay UE in an idle state or an inactive state to reliably establish an RRC connection to serve a remote UE.

According to an aspect of the present invention, provided is a method performed by user equipment, the method being a processing method performed during communication performed between user equipment (UE) and a base station on the basis of a multi-path communication mode, comprising the following steps:
Receiving, by the UE, an RRC message from the base station, the message including information used to instruct the UE to establish an indirect connection for communicating with the base station via a relay UE, and the message also including identity information of the relay UE;
When receiving the RRC message, the UE setting the relay UE corresponding to the identity information of the relay UE included therein as a target relay UE, and establishing a sidelink (SL) connection or a PC5 connection with the relay UE; and
In a process of initiating establishment of the SL connection or the PC5 connection with the relay UE, or after the SL connection or the PC5 connection is successfully established, the UE transmitting to the relay UE a PC5 RRC message of the information used to instruct that the indirect connection be established.

In the above method performed by user equipment, preferably,

The PC5 RRC message further comprises an information element (IE), and the value of the IE is path addition or is a Boolean type.

The foregoing method performed by a user equipment, preferably, further comprises the following steps:
After the SL connection or the PC5 connection is successfully established, and when or after the relay UE receives the PC5 RRC message comprising the IE,
If the relay UE is in an idle state, initiating, by the relay UE, an RRC connection establishment procedure; and
If the relay UE is in an inactive state, the relay UE resuming RRC connection establishment, or initiating an RRC connection resumption procedure.

The foregoing method performed by a user equipment, preferably, further comprises the following steps:
In the process of initiating the establishment of the SL connection or the PC5 connection with the relay UE, and when or after the relay UE receives the PC5 RRC message comprising the IE,
If the relay UE is in an idle state, initiating, by the relay UE, an RRC connection establishment procedure; and
If the relay UE is in an inactive state, the relay UE resuming RRC connection establishment, or initiating an RRC connection resumption procedure.

In the above method performed by a user equipment, preferably,
The RRC message received by the UE from the base station further comprises, in addition to information used to establish an indirect path, configuration information for configuring a split signaling radio bearer SRB 1 for the UE.

The foregoing method performed by a user equipment, preferably, further comprises the following steps:
Associating, by the UE, the SRB 1 with an additional radio link control (RLC) entity on the basis of the configuration information, wherein the type of the additional RLC entity is a PC5 RLC entity, a configuration of the additional PC5 RLC entity is a default configuration for SL-RLC1, and the default configuration for SL-RLC1 is a dedicated configuration.

The foregoing method performed by a user equipment, preferably, further comprises the following steps:
Generating, by the UE, an RRC reconfiguration complete message, and submitting the message to a lower layer to transmit same.

The foregoing method performed by a user equipment, preferably, further comprises the following steps:
When the relay UE receives a message transmitted via the RLC entity using the configuration for SL-RLC1,
If the relay UE is in an idle state, initiating, by the relay UE, an RRC connection establishment procedure; and
If the relay UE is in an inactive state, the relay UE resuming RRC connection establishment, or initiating an RRC connection resumption procedure.

The foregoing method performed by a user equipment, preferably, further comprises the following steps:
When the UE submits the generated RRC reconfiguration complete message to the lower layer to transmit same, performing transmission via an indirect path, wherein the indirect path is a primary path between two RLC entities associated with SRB1.

According to another aspect of the present invention, provided is a user equipment, comprising:
A processor; and
A memory, having instructions stored therein,
The instructions, when run by the processor, performing the method described above.

The method performed by a user equipment and the corresponding user equipment according to the present invention can cause a relay UE in an idle state or an inactive state to reliably establish an RRC connection to serve a remote UE.

### BRIEF DESCRIPTION OF THE DRAWINGS

FIG. 1 is a schematic diagram showing an operation mode (multi-path) in which direct connection and indirect connection are in parallel, i.e., a multi-path communication mode.
FIG. 2 is a schematic diagram showing UE-to-network relay.
FIG. 3 is a schematic diagram showing protocol layer structures of an SRB and a split SRB.
FIG. 4 is a flowchart showing a method performed by user equipment (UE) according to an embodiment of the present invention.
FIG. 5 is a simplified structural block diagram of a user equipment according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment;
NR: New Radio;
LTE: Long Term Evolution;
eLTE: enhanced Long Term Evolution;
RRC: Radio Resource Control (Layer)
MAC: Medium Access Control (Layer)
MAC CE: MAC Control Element;
SDAP: Service Data Adaptation Protocol;
SRAP: Sidelink Relay Adaptation Protocol;
RLC: Radio Link Control;
PDCP: Packet Data Convergence Protocol;
ADAPT: adaptation layer;
PHY: physical layer;
RB: radio bearer;
DRB: Data Radio Bearer;
SRB: Signaling Radio Bearer;
PDU: Protocol Data Unit;
SDU: Service Data Unit;
V2X: Vehicle-to-Everything.

In the present invention, a network, a base station and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background, may also refer to an NR device that supports an NR sidelink relay architecture, and may also refer to an NR device or an LTE device of another type.

In the present invention, sidelink and PC5 may be used interchangeably, and RLC channel, RLC entity and RLC bearer may be used interchangeably. In addition, PC5 is used for relay operations herein, and can therefore also be replaced with relay.

Hereinafter, a description will be given of related art of the present invention.

### Multi-path Communication

As shown in FIG. 1, UE and a base station may communicate with each other via a direct connection and an indirect connection. The UE may be configured to operate in a communication mode of a direct connection and an indirect connection simultaneously, and such a communication mode may be referred to as multi-path communication. A direct connection path may be referred to as a direct path, and an indirect connection path may be referred to as a relay path or an indirect path. A path corresponding to a direct connection is a direct path, and a path corresponding to an indirect connection is an indirect path.

The direct connection and the direct path are interchangeable herein. The indirect connection, the relay path, and the indirect path are interchangeable.

Multi-path communication may also be replaced herein with multi-connection communication.

### Near Field Communication Between UE (UE to UE, U2U communication)

A UE and a UE may be wirelessly connected to each other using near field communication, so as to achieve transmission of data or signaling. The near field communication mentioned herein primarily refers to a sidelink connection, a Wi-Fi connection, or another connection means. A sidelink connection-based reference point between a UE and a UE is referred to as PC5, and therefore a sidelink-based connection between the UE may be referred to as a PC5 connection. Sidelink connection and PC5 connection are interchangeable herein. Such a PC5 connection may be identified by a pair of Layer-2 identities (IDs) typically including a source Layer-2 identity (ID) and a destination Layer-2 identity (ID). Such a PC5 connection may be simply referred to as a PC5 connection, a sidelink connection, or the like, for or corresponding to a certain destination.

### UE-to-Network Relay (U2N relay)

As shown in FIG. 2, the left side is a remote UE, the middle is a relay UE, and the right side is a network. The remote UE and the relay UE may be connected to each other via the aforementioned PC5 interface, or Wi-Fi, or another connection means. The PC5 connection is mainly used as an example herein. The relay UE and the network may be connected via a Uu interface. The relay UE relays and forwards signaling and data between the remote UE and the network/base station.

### Uu interface

A wireless communication interface between UE and a base station. The UE may communicate with eNB over the Uu interface by using an E-UTRAN. The UE may also communicate with gNB over the Uu interface by using NR.

### Signal Radio Bearer (SRB) and Split SRB

During communication between the UE and the base station, the SRB is used to bear signaling. The UE, by means of a Uu PDCP layer, encapsulates data of messages to the network for air interface RRC connection setup, re-establishment, resume, etc., and then submits same to a Uu RLC entity to be further encapsulated, borne on a Uu RLC channel, and submitted downwards layer by layer via Uu-MAC and Uu-PHY. Conversely, an RRC message transmitted by the network to the UE also arrives at the UE via the SRB. This type of SRB may be referred to as SRB via direct connection or SRB via direct path. In a multi-path configuration, this type of SRB may be referred to as a direct SRB, and may also be referred to as a direct bearer.

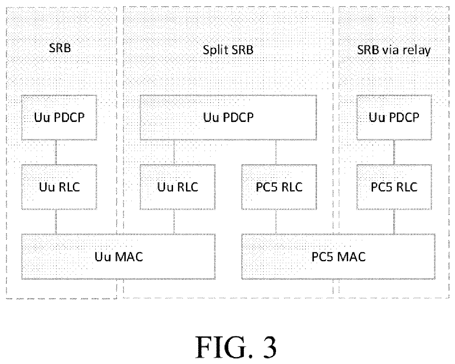

In a multi-path configuration, the UE may be configured with a multi-path (MP) split SRB (which is simply referred to as a split SRB herein), the protocol structure of which is shown in FIG. 3, wherein a PDCP entity is associated with at least one Uu RLC entity and at least one PC5 RLC entity. After encapsulating data by means of the Uu PDCP layer, the UE may submit the encapsulated data to the Uu RLC entity or the PC5 RLC entity according to a submission rule. If the data is submitted to Uu RLC, processing is the same as that in the case of the SRB. If the data is submitted to PC5 RLC, the data is borne on a PC5 RLC channel after further encapsulation, submitted downwards layer by layer via PC5-MAC and PC5-PHY, and finally transmitted to the base station/network via a relay path. If the data is submitted to Uu RLC, as in the case of the SRB, the data is finally transmitted to the base station/network via a direct path. This type of split SRB may be referred to as multi-path split SRB via multi-path, or split SRB via relay path, or a split bearer. In the PDCP layer, a PDCP entity may be configured with a primary path, and if the primary path of the PDCP entity corresponds to a relay or an indirect connection, data is generally submitted to the PC5 RLC entity. Conversely, if the primary path corresponds to a direct connection, data is generally submitted to the Uu RLC entity. Only when arriving data exceeds a certain threshold may a part of the data be submitted to an RLC entity corresponding to a non-primary path. The PDCP entity may also be configured to be in a duplication mode, in which, after data is encapsulated via the PDCP layer, identical PDCP PDUs are generated and transmitted to the Uu RLC entity and the PC5 RLC entity associated therewith, respectively.

In a multi-path configuration, the UE may be further configured with an SRB via relay, which may also be referred to as an indirect SRB. The protocol structure thereof is as shown in FIG. 3. Data is encapsulated via the Uu PDCP layer before being submitted to a PC5 RLC entity to be further encapsulated, borne on a PC5 RLC channel, submitted downwards layer by layer via PC5 MAC and PC5 PHY, transmitted to the relay UE, and then forwarded to the network/base station. Conversely, an RRC message transmitted by the network to the UE may also arrive at the UE via an SRB via relay via the relay UE. This type of SRB via relay may also be referred to as an SRB via a relay path, or an SRB via an indirect connection, or an indirect bearer.

Similarly, a data radio bearer (DRB) is used to bear data, is also referred to as a data bearer, has the same operation mode as the SRB, and may also be configured as a direct DRB, an indirect DRB, and an MP split DRB. The description will not be provided again here.

According to contents that are borne, signal radio bearers (SRBs) may be divided into the following types:
SRB0: used to bear an RRC message transmitted using a logical channel of a common control channel (CCCH).
SRB1: used to bear an RRC message and a non-access stratum message transmitted using a logical channel corresponding to a dedicated control channel (DCCH).
SRB2: a non-access stratum (NAS) message and an RRC message carrying measurement information transmitted using a logical channel corresponding to a dedicated control channel.

Herein, SRB1 is used as an example, but not limited to other SRBs. Hereinafter, the SRB may also be replaced with a DRB.

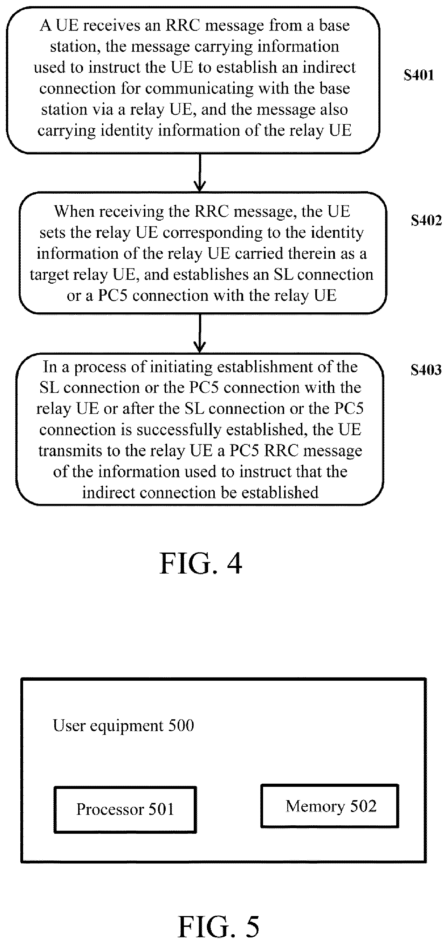

The method of the present invention is described below with reference to FIG. 4.

FIG. 4 is a flowchart of a processing method performed by UE according to an embodiment of the present invention.

Specific embodiments are provided below to describe a processing method of the present invention.

### Embodiment 1

In the present embodiment, provided is a processing method performed during communication performed between UE and a base station on the basis of a multi-path communication mode, as shown in FIG. 4, including the following steps:
S401: receiving, by the UE, an RRC message from the base station, the message including information used to instruct the UE to establish an indirect connection for communicating with the base station via a relay UE, wherein, preferably, the message further includes identity information of the relay UE, for example, a UE identity of the relay UE, so that the UE can identify the relay UE;
S402: when receiving the RRC message, setting the relay UE corresponding to the identity information, for example, the UE identity of the relay UE included therein, as a target relay UE, and establishing an SL connection or a PC5 connection with the relay UE, wherein, for example, the UE may instruct an upper layer above a UE RRC layer to trigger the establishment of a PC5 connection with the relay UE.
S403: in a process of initiating establishment of the SL connection or the PC5 connection with the relay UE, or after the SL connection or the PC5 connection is successfully established, the UE transmitting to the relay UE a PC5 RRC message of the related information used to instruct that the indirect connection be established.

Specifically, the UE receives an RRC message, e.g., an RRC reconfiguration message, from the base station. The message may include information to instruct the UE to establish an indirect connection. For example, the message may include information for the relay UE of the indirect connection, which includes at least a UE identity, e.g., an L2 ID, of the relay UE, and may further include, for example, configuration information for connection path addition. On the basis of the configuration information, the UE may establish a path for the indirect connection, etc.

Upon receiving the above message, the UE initiates establishment of a connection with the relay UE. Establishment of a PC5 connection is used herein as an example. The UE establishes a PC5 connection with the relay UE. However, as described above, a sidelink connection and a PC5 connection are interchangeable herein. That is, a sidelink connection is also applicable. The UE may also establish a connection with the relay UE via Wi-Fi. For example, the UE may instruct an upper layer above the UE RRC layer to trigger the establishment of a PC5 connection with the relay UE.

After the PC5 connection is successfully established, the UE transmits to the target relay UE a PC5 RRC message, such as a *NotificationMessageSidelink* message or a UEAssistanceInformationSidelink message. The message indicates the related information used to establish the indirect connection.

For example, an information element may be added to the message, and may be an IE named as a cause value. The value of the IE is path addition, or information corresponding to the value is path addition. The value of such an IE or the information corresponding to the value may also be related information representing an indirect connection, such as indirect path/indirect connection.

The value of such an IE may also be a Boolean type, and when the value of the IE is true, this represents information related to an indirect connection.

When receiving the PC5 RRC message including the IE, if the relay UE is in an IDLE state, the relay UE may initiate an RRC connection establishment procedure. When receiving the PC5 RRC message including the IE, if the relay UE is in an INACTIVE state, the relay UE may resume RRC connection establishment, or initiate an RRC connection resume procedure.

### Embodiment 2

A difference from Embodiment 1 lies in that the RRC message received by the UE from the base station further includes, in addition to information used to establish an indirect path, configuration information for configuring split SRB 1 for the UE.

For example, the UE associates SRB1 with an additional RLC entity on the basis of the configuration information, where "additional" means that an RLC entity is added in addition to the RLC entity of SRB1 on the Uu interface, and the type of the RLC entity is a PC5 RLC entity. Such an association mainly refers to association with the PDCP entity of SRB1. In general, one PDCP entity is associated with one RLC entity. A PDU of the PDCP is transmitted to an RLC entity associated therewith to be processed, and an RLC SDU from the RLC entity is also transmitted to the PDCP to be processed. If the PDCP entity is also associated with other RLC entities, PDUs of the PDCP may be transmitted, according to a certain rule, to these RLC entities associated therewith, and SDUs submitted from these RLC entities may be received to be processed.

Preferably, a configuration of this additional PC5 RLC entity may use/apply the default configuration for SL-RLC1. The default configuration for SL-RLC1 is a dedicated configuration.

When the RRC message received by the UE from the base station further includes, in addition to the information used to establish the indirect path, related information for configuring split SRB1 for the UE, the UE may generate an RRC reconfiguration complete message, and submit the message to the lower layer to transmit. Preferably, the message is transmitted via the indirect path.

When receiving the message transmitted via the SL-RLC1 entity, that is, when receiving the message transmitted via the RLC entity using the configuration for SL-RLC1, if the relay UE is in the IDLE state, the relay UE may initiate an RRC connection establishment procedure. If the relay UE is in the INACTIVE state, the relay UE may resume an RRC connection establishment, or initiate an RRC connection resume procedure.

### Embodiment 3

Embodiment 3 may be arrived at by combining Embodiments 1 and 2.
Step one: receiving, by the UE, an RRC message from the base station, the message including information used to instruct the UE to establish an indirect connection for communicating with the base station via a relay UE, wherein, preferably, the message further includes identity information of the relay UE, for example, a UE identity of the relay UE, so that the UE can identify the relay UE;
Step two: when receiving the RRC message, setting the relay UE corresponding to the identity information, for example, the UE identity of the relay UE included therein, as a target relay UE, and establishing an SL connection or a PC5 connection with the relay UE.
Step three: determining whether the RRC message further includes related information for configuring split SRB 1 for the UE.

If such configuration information is included, the UE performs the operation in Embodiment 2, and correspondingly, the relay UE triggers the establishment or resumption of the RRC connection in the manner described in Embodiment 2.

Otherwise, that is, if the RRC message does not include the related configuration information for split SRB1, the UE performs the operation in Embodiment 1, and correspondingly, the relay UE triggers the establishment or resumption of the RRC connection in the manner described in Embodiment 1.

### Embodiment 4

In Embodiment 1, after completing the establishment of the connection with the relay UE, the UE indicates to the relay UE information related to establishing the indirect connection. As a variation of Embodiment 1, during initiation of the establishment of the connection to the relay UE, the UE may indicate to the relay UE the information related to establishing the indirect connection.

Here, establishment of a PC5 connection is used as an example. The UE establishes a PC5 connection with the relay UE. However, as described above, a sidelink connection and a PC5 connection are interchangeable herein. That is, a sidelink connection is also applicable. The UE may also establish a connection with the relay UE via Wi-Fi. For example, the UE may instruct an upper layer above the UE RRC layer to trigger the establishment of a PC5 connection with the relay UE. The information related to indicating the establishment of the indirect connection is included in a connection establishment request message. For example, the IE described in Embodiment 1 or similar indication information is included in a PC5 connection establishment request message (a direct connection request). Alternatively, the indication information is included in other messages, such as a configuration message, etc., in a connection establishment procedure. These messages are used to establish a connection, and are typically messages transmitted between upper layers, such as the PC5 layers, above the UE RRC layer.

Correspondingly, when or after the relay UE receives such a message, if the relay UE is in the IDLE state, the relay UE may initiate an RRC connection establishment procedure. If the relay UE is in the INACTIVE state, the relay UE may resume RRC connection establishment, or initiate an RRC connection resume procedure.

### Embodiment 5

As a variation of Embodiment 2, the UE receives an RRC message, such as an RRC reconfiguration message, from the base station, and the message may include information instructing the UE to establish an indirect connection. Upon receiving such an RRC message, the UE always associates SRB1 with an additional RLC entity, and the specific operation is as shown in Embodiment 2. Preferably, between the two RLC entities associated with SRB1, a primary path is set to a relay or an indirect path. On the basis of the foregoing operation, the UE may transmit the generated RRC reconfiguration complete message via the indirect path when submitting same to the lower layer for transmission.

Preferably, if the received RRC message from the base station includes information related to configuring split SRB 1 for the UE, the UE does not perform the foregoing operation, but performs the operation according to the configuration information, that is, performs the operation in Embodiment 2.

Preferably, after the RRC reconfiguration complete message is transmitted successfully, or after the establishment of the indirect connection is completed, the UE may autonomously release the additional RLC entity.

FIG. 5 is a simplified structural block diagram of a user equipment according to the present invention.

As shown in FIG. 5, the user equipment 500 includes at least a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or another memory system. The memory 502 has program instructions stored thereon. When the instructions are run by the processor 501, one or several steps in the processing method may be executed by a UE of the present disclosure.

The method and related equipment according to the present disclosure have been described above in conjunction with preferred embodiments. It should be understood by those skilled in the art that the method shown above is only exemplary, and the above embodiments can be combined with one another as long as no contradiction arises. The method of the present invention is not limited to the steps or sequences illustrated above.

The user equipment shown above may include more modules, for example, may also include modules that can be developed or developed in the future and can be used for base stations, MMEs, or UE, and so on. Various identifiers shown above are only exemplary, not for limitation, and the present disclosure is not limited to specific information elements serving as examples of these identifiers. A person skilled in the art could make various alterations and modifications according to the teachings of the illustrated embodiments.

It should be understood that the above embodiments of the present disclosure may be implemented through software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The so-called "computer system" may be a computer system embedded in the device, which may include operating systems or hardware (for example, peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed via circuits (for example, monolithic or multi-chip integrated circuits). Circuits designed to execute the functions described in the present specification may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by a user equipment, the method being a processing method performed during communication performed between the user equipment (UE) and a base station on the basis of a multi-path communication mode, comprising the following steps:
receiving, by the UE, an RRC message from the base station, the message including information used to instruct the UE to establish an indirect connection for communicating with the base station via a relay UE, and the message also including identity information of the relay UE;
when receiving the RRC message, the UE setting the relay UE corresponding to the identity information of the relay UE included therein as a target relay UE, and establishing a sidelink (SL) connection or a PC5 connection with the relay UE; and
in a process of initiating establishment of the SL connection or the PC5 connection with the relay UE, or after the SL connection or the PC5 connection is successfully established, the UE transmitting to the relay UE a PC5 RRC message of the information used to instruct that the indirect connection be established.

2. The method performed by a user equipment according to claim 1, wherein
the PC5 RRC message further comprises an information element (IE), and the value of the IE is path addition or is a Boolean type.

3. The method performed by a user equipment according to claim 2, further comprising the following steps:
after the SL connection or the PC5 connection is successfully established, and when or after the relay UE receives the PC5 RRC message comprising the IE,
if the relay UE is in an idle state, initiating, by the relay UE, an RRC connection establishment procedure; and
if the relay UE is in an inactive state, the relay UE resuming RRC connection establishment, or initiating an RRC connection resumption procedure.

4. The method performed by a user equipment according to claim 2, further comprising the following steps:
in the process of initiating establishment of the SL connection or the PC5 connection with the relay UE, and when or after the relay UE receives the PC5 RRC message comprising the IE,
if the relay UE is in an idle state, initiating, by the relay UE, an RRC connection establishment procedure; and
if the relay UE is in an inactive state, the relay UE resuming RRC connection establishment, or initiating an RRC connection resumption procedure.

5. The method performed by a user equipment according to any one of claims 1 to 4, wherein
the RRC message received by the UE from the base station further comprises, in addition to information used to establish an indirect path, configuration information for configuring a split signaling radio bearer SRB 1 for the UE.

6. The method performed by a user equipment according to claim 5, further comprising the following step:
associating, by the UE, the SRB1 with an additional radio link control (RLC) entity on the basis of the configuration information, wherein the type of the additional RLC entity is a PC5 RLC entity, a configuration of the additional PC5 RLC entity is a default configuration for SL-RLC1, and the default configuration for SL-RLC1 is a dedicated configuration.

7. The method performed by a user equipment according to claim 6, further comprising the following steps:
generating, by the UE, an RRC reconfiguration complete message, and submitting the message to a lower layer to transmit the same.

8. The method performed by a user equipment according to claim 7, further comprising the following steps:
when the relay UE receives a message transmitted via the RLC entity using the configuration for SL-RLC1,
if the relay UE is in an idle state, initiating, by the relay UE, an RRC connection establishment procedure; and
if the relay UE is in an inactive state, the relay UE resuming RRC connection establishment, or initiating an RRC connection resumption procedure.

9. The method performed by a user equipment according to claim 7, further comprising the following step:
when the UE submits the generated RRC reconfiguration complete message to the lower layer to transmit same, performing transmission via an indirect path, wherein the indirect path is a primary path between two RLC entities associated with SRB1.

10. A user equipment, comprising:
a processor; and
a memory, having instructions stored therein,
wherein the instructions, when run by the processor, perform the method according to any one of claims 1 to 9.
